Europäisches Patentamt

European Patent Office

Office européen des brevets

(11) Publication number: **0 417 317 A1**

# EUROPEAN PATENT APPLICATION
## published in accordance with Art. 158(3) EPC

(21) Application number: 90904945.4

(22) Date of filing: 27.03.90

(86) International application number:
PCT/JP90/00403

(87) International publication number:
WO 90/11503 (04.10.90 90/23)

(51) Int. Cl.5: **G01L 13/02**

(30) Priority: 27.03.89 JP 71941/89

(43) Date of publication of application:
20.03.91 Bulletin 91/12

(84) Designated Contracting States:
**DE FR GB IT**

(71) Applicant: **TAISEI KOGYO CO., LTD.**
2-32-2, Wakagi Itabashi-ku
Tokyo(JP)

(72) Inventor: **MIYANO, Naoto Taisei Kogyo Co.,
Ltd.**
**2-32-2, Wakagi Itabashi-ku**
**Tokyo 174(JP)**

(74) Representative: **Weber, Joachim et al**
**Hoefer, Schmitz, Weber, Patentanwälte**
**Ludwig-Ganghofer-Strasse 20**
**W-8022 Grünwald/München(DE)**

(54) **DIFFERENTIAL PRESSURE GAUGE.**

(57) This invention relates to a differential pressure gauge utilized for measuring the difference between fluid pressures at two positions spaced apart from each other in a longitudinal direction of a fluid conduit line in the internal space of the fluid conduit. The differential pressure gauge includes a differential pressure displacement member (24) disposed in such a manner as to be capable of displacement in a vessel (18) due to the pressure difference between the fluids introduced into the vessel communicating with two mutually different fluid positions. A magnet (34) is fitted to this differential pressure displacement member and magneto-sensitive means (48) for generating a signal corresponding to the intensity of magnetism sensed from the magnet inside the vessel is fitted to the outside of the vessel. This signal is used for measuring the pressure difference in pressure difference measuring means (50). The magnet and the magneto-sensitive means are completely sealed and shielded by the peripheral wall of the vessel and eliminate the seal structure and seal work that otherwise make the production, assembly and maintenance and inspection very troublesome and complicated.

F I G. 1

## DIFFERENTIAL PRESSURE GAUGE

[Technical Field]

The present invention relates to a differential pressure gauge for measuring the pressure difference of a fluid between two points.

[Background Art]

A differential pressure gauge is used to measure oil pressures at upstream and downstream sides of a filter disposed in a fluid line, for example, a hydraulic circuit, thereby check the degree of clogging of the filter.

One type of the conventional differential pressure gauges for such a usage has a cylinder communicating with a fluid line at upstream and downstream sides of a filter, and a piston slidably disposed in the cylinder. In this type of conventional differential pressure gauge, a part of the piston protrudes outside the cylinder through a through hole formed at one end surface of the cylinder. The pressure difference of fluids applied to both sides of the piston causes the piston to slide in the cylinder so that the protruding portion of the piston activates a plurality of microswitches provided at given intervals outside the cylinder, and the pressure difference of the fluid between two points is measured based on electronic signals from the microswitches.

In the above type of conventional differential pressure gauge, a seal ring should be provided at the through hole at one end surface of the cylinder in order to prevent pressurized oil from leaking from a gap between the through hole and the protruding portion of the piston. Since this seal ring produces a frictional resistance between itself and the protruding portion of the piston at the time the piston slides in the cylinder, the above conventional differential pressure gauge cannot measure a pressure difference of a level equal to or smaller than this frictional resistance.

Another type of the conventional differential pressure gauges for the aforementioned usage has a partition wall, such as a diaphragm, to separate the inner space of the cylinder communicating with a fluid line at upstream and downstream sides of a filter. In this type of conventional differential pressure gauge, a strain gauge is provided at the partition wall to measure distortion (or deformation) of the partition wall caused by the pressure difference of a fluid applied to both sides of the partition wall, and the pressure difference of a fluid between two points is measured on the basis of an electrical signal from the strain gauge.

According to this type of conventional differential pressure gauge, in order to supply the electrical signal from the strain gauge to a pressure-difference measuring circuit provided at the outside of the cylinder, it is necessary to form a through hole in the peripheral wall of the cylinder and put a lead for the electrical signal through the through hole. This through hole should be sealed after the lead is put through in order to prevent pressurized oil from leaking.

A differential pressure gauge for use in an oil pressure circuit which uses an oil of a relatively large pressure, a structure for sealing the aforementioned lead-through hole becomes relatively large and the sealing work and maintenance and inspection are troublesome.

The present invention has been contrived from the above described situations, and the object thereof is to provide an inexpensive differential pressure gauge, which can not only improve the accuracy in measuring the pressure difference, but also can eliminate a troublesome sealing work as well as simplify the production and maintenance and inspection work.

[Disclosure of Invention]

A differential pressure gauge according to the present invention comprises a container having first and second communication holes communicating with two different positions of a fluid; a movable member provided in the container in a manner that it is movable by a pressure difference between pressure of a fluid introduced through the first communication hole into the container and pressure of a fluid introduced through the second communication hole into the container; a magnet attached to the movable member; magnetic sensor means, provided outside of the container, for sensing a magnetic strength of the magnet on the movable member in the container and generating a signal corresponding to the sensed magnetic strength; and pressure-difference measuring means for measuring the pressure difference based on the signal from the magnetic sensor means.

The magnetic strength of the magnet attached to the movable member, which is sensed by the magnetic sensor means, changes when the movable member moves in the container. The displacement of the movable member corresponding to the pressure difference applied to the movable member can therefore be detected by a combination of the magnet and magnetic sensor means completely separated from each other by the peripheral wall of the container, making it possible to find out the pressure difference applied to the movable member without forming a through hole in the container, which requires sealing.

Since it is possible to eliminate a seal member for the protruding portion of the piston as the movable member and a sealing structure for the lead, which are needed in the above-described two types of conventional differential pressure gauges, not only the accuracy in measuring the pressure difference can be improved, but also the troublesome sealing work can be eliminated to simplify the manufacturing and maintenance and inspection work, realizing a low-cost differential pressure gauge.

[Brief Description of Drawings]

Fig. 1 is a longitudinal cross-sectional view schematically illustrating a differential pressure gauge according to one embodiment of the present invention being placed at a predetermined position in a hydraulic line;

Fig. 2 is an enlarged longitudinal cross-sectional view schematically showing a modification of a movable member for use in the differential pressure gauge shown in Fig. 1;

Fig. 3 is a longitudinal cross-sectional view schematically illustrating a differential pressure gauge according to another embodiment of the present invention; and

Fig. 4 is a graph schematically showing the relationship between a distance, between a magnet attached to a movable member and magnetic sensor means, located outside a container, for detecting the magnetic strength of the magnet on the movable member in the container, and a voltage of a current flowing through a Hall element as the magnetic sensor means, when this distance varies due to displacement of the movable member.

[Best Mode of Carrying Out the Invention]

Differential pressure gauges according to various embodiments of the present invention and a modification of a movable member in this differential pressure gauge will now be described referring to the accompanying drawings.

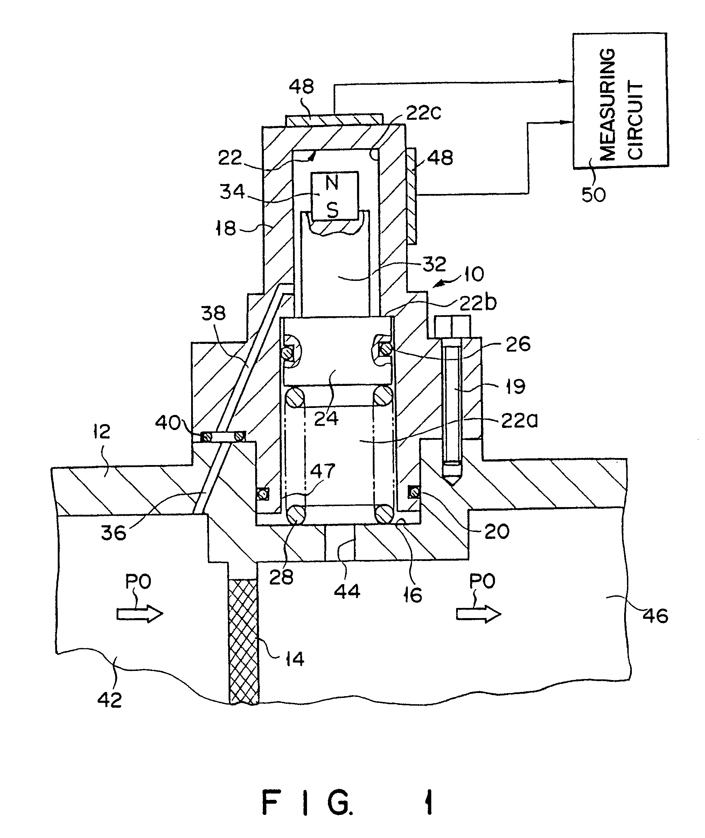

Fig. 1 schematically showing a longitudinal cross section of a differential pressure gauge 10 according to one embodiment of the present invention, the gange 10 being provided at a predetermined position in a hydraulic line 12.

The inner space of the hydraulic line 12 is partitioned by a filter 14 extending in a direction approximately perpendicular to the lengthwise direction of the hydraulic line 12. The filter 14 is made of a plate member having many perforations formed therein. In Fig. 1, a pressurized oil in the hydraulic line 12 flows through the filter 14 from the left to the right, as indicated by white arrows PO.

A recess 16 for attaching a differential pressure gauge is formed in the outer peripheral surface of the hydraulic line 12 at a position located downstream side of and adjacent to the filter 14. The recess 16 has a circular plane shape. A large diameter portion of a multistepped, cylindrical container 18 of the differential pressure gauge 10 is detachably secured in the recess 16 by fixing means 19 of a well-known type, such as a bolt, with the gap between the inner peripheral surface of the recess 16 and the outer peripheral surface of the large diameter portion of the container 18 being sealed by a seal ring 20 mounted on the outer peripheral surface of the large diameter portion. The container 18 is made of a non-magnetic material, such as stainless steel.

A stepped stepped inner space 22, which has a circular cross section, is formed in the container 18 and opens at one end of the large diameter portion. In a large diameter portion 22a of the inner space 22, a piston 24 having a circular cross section is disposed to be slidable in the longitudinal direction of the container 18. A seal ring 26 for sealing the gap between the outer peripheral surface of the piston 24 and the inner peripheral surface of the large diameter portion of the inner space 22 is provided on the outer peripheral surface of the piston 24. A compression coil spring 28 is further disposed at the large diameter portion of the inner space 22 between the piston 24 and the bottom surface of the recess 16, the piston 24 abutting on a stepped portion 22b of the inner space 22 by the urging force of the compression coil spring 28.

The piston 24 has a magnet supporting projection 32 concentrically extending in a small diameter portion 22c of the inner space 22, with a magnet 34 supported on the protruding end of the projection 32.

On the flattened surface surrounding the entrance of the recess 16 of the hydraulic line 12, a first through hole 36 communicating with the inner space of the hydraulic line 12 at the upstream side of the filter 14 is formed. The opening of the first through hole 36 in the flattened surface is covered with the opening of one end of a first communication hole 38, which is formed in the peripheral wall of the container 18 fixed to the recess 16. The gap between the opening of one end of the first communication hole 38 and the above described opening of the first through hole 36 is sealed with a seal ring 40, which is provided on the peripheral wall of the container 18 in such a manner as to surround the opening of one end of the first communication hole 38. The other end of the first communication hole 38 opens at the small diameter portion 22c of the inner space 22 in the container 18. Therefor, the small diameter portion 22c of the inner space 22 in the container 18 communicates, via the first communication hole 38 in the peripheral wall of the container 18 and the first through hole 36 of the hydraulic line 12, with a region 42 at the upstream side of the filter 14 in the inner space of the hydraulic line 12.

On the bottom surface of the recess 16, a second through hole 44 is formed, communicating with the inner space of the hydraulic line 12 at the downstream side of the filter 14. The large diameter portion 22a of the inner space 22 in the container 18, therefore, communicates via the second through hole 44 of the hydraulic line 12 with a region 46 at the downstream side of the filter 14 in the inner space of the hydraulic line 12. According to this embodiment, the opening of the large diameter portion 22a of the inner space 22, facing the bottom surface of the recess 16, serves as a second communication hole 47 in cooperation with the second through hole 44 in the hydraulic line 12, so that the large diameter portion 22a of the inner space 22 communicates with the region 46 at the downstream side of the filter 14 in the inner space of the hydraulic line 12. Hall elements 48 serving as magnetic sensing means for sensing the strength of the magnetic force produced from the magnet 34 on the piston 24 are attached on a protruding end of the small diameter portion and a region of the outer surface, located adjacent to the protruding end, of the container 18 via a proper insulation member. These Hall elements 48 are connected to a measuring circuit 50 whose functions will be described in detail later.

In the above-described embodiment, the greater the degree of the clogging in the filter 14 of the hydraulic line 12, the larger the difference of the oil pressure between the upstream region 42 and the downstream region 46 in the inner space of the hydraulic line 12. The upstream region 42 in the inner space of the hydraulic line 12 is communicated with the small diameter portion 22c of the inner space 22 in the container 18 of the differential pressure gauge 10, while the downstream region 46 in the inner space of the hydraulic line 12 is communicated with the large diameter portion 22a of the inner space 22 in the container 18 of the differential pressure gauge 10. Therefore, as the pressure difference between both regions increases, the pressure difference acting on both surfaces of the piston 24 in the inner space 22 also becomes greater. This causes the piston 24 to move toward the bottom surface of the recess 16 against the urging force of the compression coil spring 28. The piston 24, therefore, acts as the movable member to vary its position based on the pressure difference.

The Hall elements 48 at the protruding end of the small diameter portion of the container 18 generate electromotive force due to the Hall effect in response to the sensed magnetic strength of the magnetic 34 on the piston 24. The movement of the piston 24 caused by the pressure difference as described above varies the sensed magnetic strength of the magnetic 34 on the piston 24, changing the generated electromotive force accordingly.

The measuring circuit 50 measures the difference between oil pressures at the upstream region 42 and downstream region 46 in the inner space of the hydraulic line 12, based on a change in voltage of a current flowing through the Hall elements 48 with a change in the magnitude of the electromotive force generated by the Hall elements 48.

This will be described more specifically. According to this embodiment, while an electric current is supplied to the Hall elements 48, the electromotive force generated by the Hall elements 48 continuously changes with respect to a preset reference level when the magnetic strength of the magnet 34 sensed by the Hall elements 48 varies. In the measuring circuit 50, the magnitude of a predetermined electromotive force generatabed by the hall elements 48 due to a predetermined pressure difference acting on the piston 24 when the filter 14 is fresh, i.e., a voltage value, is preset as a reference value. The measuring circuit 50 detects the degree of an increase in pressure difference, or the degree of clogging of the filter 14, based on a change in voltage value from the reference value.

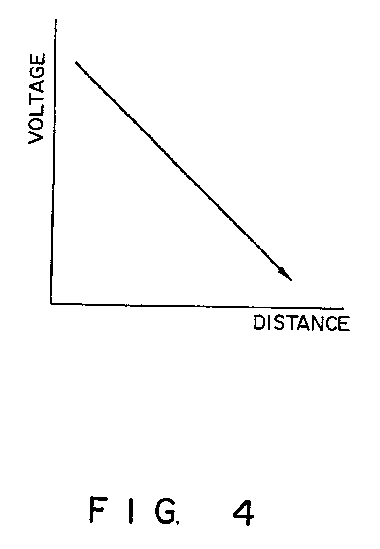

Fig. 4 schematically shows such a tendency that as the distance between the Hall elements 48 and the magnet 34 becomes large, the magnetic strength of the magnet 34 sensed by the Hall elements 48 continuously becomes smaller, which continuously reduces the magnitude of the electromotive force generated by the Hall elements 48, resulting in continuous reduction of the voltage value of the current flowing through the Hall elements 48.

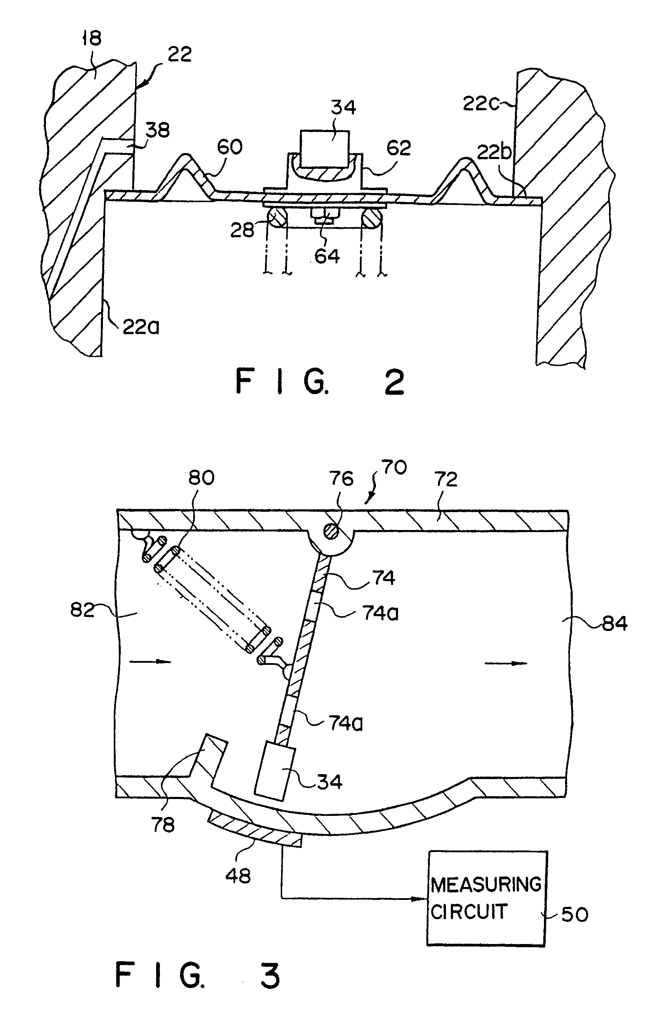

Fig. 2 schematically shows a longitudinal cross section of a diaphragm 60 which can be used, in place of the piston 24 shown in Fig. 1, as a movable member that is movable by the pressure difference acting on both sides thereof in the inner space 22 of the container 12. The peripheral edge portion of the diaphragm 60 is secured water tightly to the stepped portion 22b of the inner space 22 of the container 12. The upper end of the compression coil spring 28 housed in the large diameter portion 22a of the inner space 22 concentrically abuts on that surface of the diaphragm 60 which faces the large diameter portion 22a. A magnet support member 62 supporting the magnet 34 is secured, by fixing means 64 of a well-known type, such as a bolt, to that surface of the diaphragm 60 which faces the small diameter portion 22c of the inner space 22.

In the embodiment shown in Fig. 1 as well as in the case of using the diaphragm 60 as a modification of the movable member as shown in Fig. 2, the strength of the urging force generated by the compression coil spring 28 is so set as not to influence the measurement of the pressure difference at all.

In the case of using the diaphragm 60 as the movable member as shown in Fig. 2, a sharp change in minute pressure difference can be dealt with. In the case of using the piston 24 as the movable member in the embodiment illustrated in Fig. 1, it is possible to cope with a relatively large change in pressure difference.

Fig. 3 schematically shows a longitudinal cross section of a differential pressure gauge 70 according to another embodiment of the present invention.

This embodiment uses a container 72 having approximately tubular shape. Both ends of the inner space of the container 72 communicate with two points of a fluid line (not shown) separated from each other in the longitudinal direction thereof. However, this fluid line itself may be utilized as the container 72.

In the container 72 a movable member 74 is disposed, which is made of a plate member having substantially the same cross section in size and shape as that of the inner space of the container 72. A fluid from the fluid line (not shown) is introduced in the inner space of the container 72 to flows from the left to the right as indicated by the arrows in Fig. 3.

A part of the periphery of the movable member 74 is rotatable attached to the inner peripheral surface of the container 72 by means of a pivotal shaft 76. A stepped portion 78 is formed in the inner peripheral surface of the container 72 at the upstream side of the periphery of the movable member 74. The movable member 74 is urged toward the upstream side by the urging force of a tension coil spring 80 stretched between the movable member 74 and that point on the inner peripheral surface of the container 72 at the upstream side of the movable member 74.

The movable member 74 functions, as a first communication hole 82 and a second communication hole 84, to allow those regions of the inner space of the container 72 which are on the upstream side and downstream side of the movable member 74 to communicate with two longitudinally separated points of the inner space of the fluid line (not shown).

The movable member 74 has a hole 74a formed to permit rotation of the movable member 74. A magnet 34 is secured to the periphery of the movable member 74, and Hall elements 48 as magnetic sensor means for sensing the magnetic strength of the magnet 34 are attached on the outer peripheral surface of the container 72 through a proper insulative member. These Hall elements 84 are connected to a measuring circuit 50 whose function will be described in detail later.

In the differential pressure gauge 70 according to this embodiment too, rotation of the movable member 74 in response to the pressure difference acting on the movable member 74 in the container 72 varies the magnetic strength of the magnet 34, which is sensed by the Hall elements 48, thus changing the electromotive force generated by the Hall elements 48. The measuring circuit 50 measures the difference between fluid pressures at two longitudinally separated points in the inner space of the fluid line (not shown) on the basis a change in voltage of a current flowing through the Hall elements 48 with a change in the magnitude of the electromotive force generated by the Hall elements 48.

Although the Hall elements 48 are used as magnetic sensing means in the above-described various embodiments, a differential amplifier, for example, may be used in place of the Hall elements 48. The differential amplifier, like the Hall elements, is attached to the outer surface of the container.

A fluid whose pressure difference is to be sensed is not limited to a liquid, but it may be gas as well.

[Industrial Applicability]

A differential pressure gauge of the present invention can be used to check the degree of clogging of a filter disposed in a fluid line of, for example, a hydraulic circuit by measuring oil pressures at the upstream and downstream sides of the filter, and can also be utilized to measure the difference between fluid pressures at two longitudinally separated points in the inner space of the fluid line.

**Claims**

1. A differential pressure gauge comprising:
    a container (18, 72) having a first communication hole (38, 82) and a second communication hole (47, 84) communicating with two different positions of a fluid;

a movable member (24, 60, 74) provided in said container in a manner that it is movable by a pressure difference between pressure of a fluid introduced through said first communication hole into said container and pressure of a fluid introduced through said second communication hole into said container;

a magnet (34) attached to said movable member;

magnetic sensor means (48), provided outside of said container, for sensing a magnetic strength of said magnet on said movable member in said container and generating a signal corresponding to said sensed magnetic strength; and

pressure-difference measuring means (50) for measuring said pressure difference based on said signal from said magnetic sensor means.

2. A differential pressure gauge according to claim 1, wherein said magnetic sensor means (48) is a Hall element.

3. A differential pressure gauge according to claim 1, wherein said movable member has a piston member (24) being slidable between said first and second communication holes in said container (18).

4. A differential pressure gauge according to claim 3, wherein said magnetic sensor means (48) is a Hall element.

5. A differential pressure gauge according to claim 1, wherein said movable member has a diaphragm (60) for partitioning inner space in said container (18) into first pressure-operable space (22c) communicating with said first communication hole and second pressure-operable space (22a) communicating with said second communication hole.

6. A differential pressure gauge according to claim 5, wherein said magnetic sensor means (48) is a Hall element.

7. A differential pressure gauge according to claim 1, wherein said movable member has a pivotal member (74) having one end pivotably supported between said first communication hole (82) and said second communication hole (84) in said container (18), with a magnet (34) being secured to the other end of said pivotal member.

EP 0 417 317 A1

F I G. 1

F I G. 2

MEASURING CIRCUIT

F I G. 3

8

F I G. 4

# INTERNATIONAL SEARCH REPORT

International Application No  PCT/JP90/00403

**I. CLASSIFICATION OF SUBJECT MATTER** (if several classification symbols apply, indicate all) [6]

According to International Patent Classification (IPC) or to both National Classification and IPC

Int. Cl[5]    G01L13/02

**II. FIELDS SEARCHED**

Minimum Documentation Searched [7]

| Classification System | Classification Symbols |
|---|---|
| IPC | G01L13/02, 9/14, G01F1/28, 1/38 |

Documentation Searched other than Minimum Documentation
to the Extent that such Documents are Included in the Fields Searched [8]

| | |
|---|---|
| Jitsuyo Shinan Koho | 1926 – 1989 |
| Kokai Jitsuyo Shinan Koho | 1971 – 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| Y | JP, A, 51-139356 (Yazaki Corp.), 1 December 1976 (01. 12. 76), (Family: none) | 1, 2, 5, 6 |
| Y | JP, A, 61-256234 (Yamatake-Honeywell Co., Ltd.), 13 November 1986 (13. 11. 86), (Family: none) | 1, 2, 5, 6 |
| Y | JP, A, 62-126323 (Paul Corp.), 8 June 1987 (08. 06. 87), & US, A, 4651670 & GB, A1, 2181551 & EP, A3, 221661 | 1-3, 4 |
| Y | JP, U, 49-62076 (Ebara Corp.), 31 May 1974 (31. 05. 74), (Family: none) | 1-3, 4 |
| Y | JP, A, 53-75965 (Noken Kogyo K.K.), 5 July 1987 (05. 07. 87), (Family: none) | 1, 2, 7 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 18, 1990 (18. 06. 90) | July 2, 1990 (02. 07. 90) |

| International Searching Authority | Signature of Authorized Officer |
|---|---|
| Japanese Patent Office | |

Form PCT/ISA/210 (second sheet) (January 1985)

| **FURTHER INFORMATION CONTINUED FROM THE SECOND SHEET** | | |
|---|---|---|
| Y | JP, U, 54-70563 (Noritsu K.K.), 19 May 1979 (19. 05. 79), (Family: none) | 1, 2, 7 |
| Y | JP, A, 60-260825 (National Newclear Corp. Ltd.), 24 December 1985 (24. 12. 85), Line 14, upper left column to line 2, upper right column, page 3; Figs. 1 to 3 (Family: none) | 2, 4, 6 |
| Y | JP, A, 58-166234 (Robert Bosch GmbH), 1 October 1983 (01. 10. 83), (Family: none) | 2, 4, 6 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers , because they relate to subject matter not required to be searched by this Authority, namely:

2.☐ Claim numbers ... , because they relate to parts of the international application that do not comply with the prescribed requirements to such an extent that no meaningful international search can be carried out, specifically:

3.☐ Claim numbers , because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)